# EUROPEAN PATENT SPECIFICATION

(11) **EP 1 957 181 B1**
(45) Date of publication and mention of the grant of the patent: **11.03.2009**
(21) Application number: 06794153.4
(22) Date of filing: 12.10.2006
(51) Int. Cl.: B01D 47/02, F01N 3/04, B01D 53/68, F23J 15/04, F02M 25/00, B01D 50/00, F01N 3/021, B01D 61/02, C02F 1/44, B01D 65/08

(54) **METHOD AND ARRANGEMENT FOR CLEANING THE EXHAUST GASES OF AN INTERNAL COMBUSTION ENGINE**
VERFAHREN UND ANORDNUNG ZUR REINIGUNG DER ABGASE EINER BRENNKRAFTMASCHINE
PROCEDE ET AGENCEMENT D'EPURATION DES GAZ D'ECHAPPEMENT D'UN MOTEUR A COMBUSTION INTERNE

(30) Priority: 10.11.2005 FI 20055599
(43) Date of publication of application: 20.08.2008
(73) Proprietor: Aker Yards Oy, 20240 Turku (FI)
(72) Inventor: YLINEN, Esa, FI-00630 Helsinki (FI)
(74) Representative: Gustafsson, Aulis Valdemar
(86) International application number: PCT/FI2006/050437
(87) International publication number: WO 2007/054615

(56) References cited:
- JP-A- 61 181 593
- JP-A- 2004 089 770
- US-A- 5 329 758
- US-A1- 2004 244 734

## Description

The invention relates to a method in accordance with the preamble of claim 1 of cleaning the exhaust gases of an internal combustion engine used in the power production of a watercraft, especially a large passenger ship, in an exhaust gas scrubber mainly by water. The invention also relates to an arrangement in accordance with the preamble of claim 6 (e.g. JP 2004089770).

In order to reduce fuel costs, internal combustion engines have been developed so that they may use even fuels of lower quality, for instance heavy fuel oil. The problem often involved in these low-cost fuels is the impurities they contain, especially sulphur, which as a result of the combustion process generate sulphur oxides, SOx, which also contribute to the acidification of the environment when emitted thereto. Attempts have been made to eliminate this disadvantage by introducing the exhaust gases of the internal combustion engine to an exhaust gas scrubber, in which they are washed mainly by water, and by adding, as required, specific additives, for instance sodium hydroxide (NaOH), limestone (CaCO3) or lye (NH4OH) thereto before discharging the exhaust gases to the environment. Naturally, these additives need to be carried along with the watercraft, which requires storage, feeding equipment as well as supervision and control of the various contents in the wash water.

Alternatively, also seawater may be used as wash water, whereby the concentration of the salts in the wash water is low and seawater is required in large quantities for neutralising the SOx gases in the exhaust gases, depending on the salinity of the seawater in each particular case. Even if seawater is free of charge, its low salinity for this purpose increases the need for pumping capacity and related equipment. Seawater needs to be added to the process in multiple quantities compared to the amount of water evaporating into the exhaust gas. Consequently, even the rate of flow exiting the process will increase and affect the size of the equipment required for the treatment thereof.

Only a few SOx scrubbers have been installed on watercrafts. They are dimensioned for seawater or for joint use of seawater and lye. The use of lye increases the operating costs and the use of seawater the acquisition price, due to the dimensioning of the equipment. On the other hand, there is a substantial need for fresh water on watercrafts, especially on passenger ships. On watercrafts, fresh water is provided either by evaporation or by utilising reverse osmosis. In evaporation the energy demand is fairly high and the salinity of the used seawater will increase only to a minor extent. On the other hand the salinity of the wastewater produced together with the fresh water by using the reverse osmosis method will increase by about 40 %.

An object of the invention is to provide a novel method of cleaning the exhaust gases of an internal combustion engine used in the power production of a watercraft, especially a large passenger ship, in an exhaust gas scrubber in order to eliminate the SOx gases therein, by which method the problems related to prior art can be decreased essentially. An object is particularly to provide a method suitable for watercrafts, by means of which the overall economy of the internal combustion engines used on watercrafts, and the treatment of the combustion gases produced by them, can be improved.

The objects of the invention are primarily achieved as disclosed in the appended claims 1 and 6, and more closely as explained in the other claims.

The application of the invention is advantageous especially when fresh water is required in large quantities and the production thereof may be provided economically by using the reverse osmosis method. This is true especially in the case of large passenger ships and cruisers, which spend also longer times at sea. The applicability is increased further, if the aim is to reduce the nitrogen oxide emissions, NOx, produced by the combustion process of the watercraft's engines, by utilising clean water.

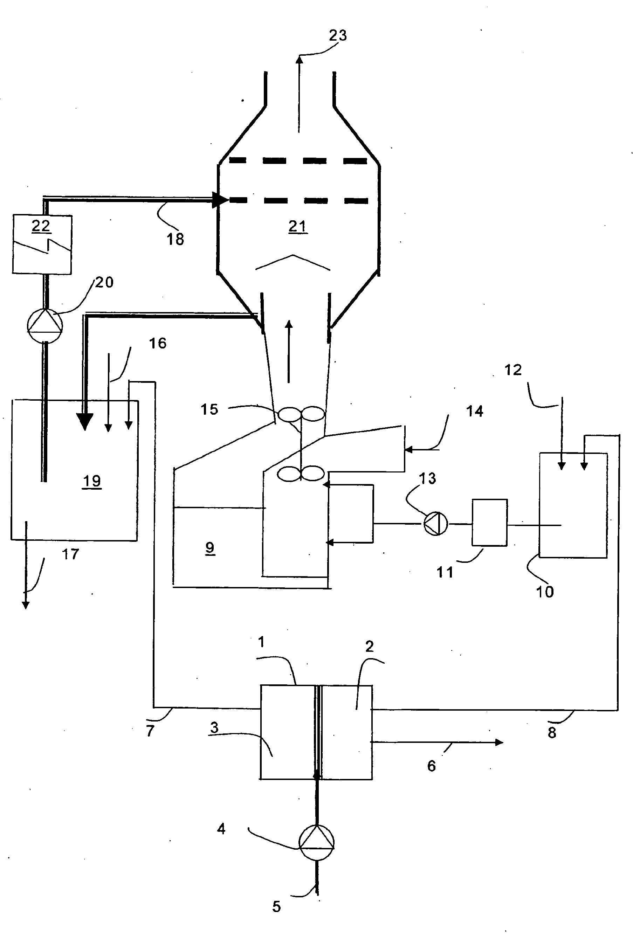

In the following, the invention is explained by way of example with reference to the appended schematic drawing, the single figure of which illustrates the application of the invention.

The drawing shows schematically an internal combustion engine 9, which may be especially a large diesel engine, to which inlet air 14 is conducted and from which exhaust gases 23 are discharged as a result of a combustion process. The engine is also provided with a turbocompressor 15.

The exhaust gases are conducted to an exhaust gas scrubber 21, in which they are washed, in order to remove particularly sulphur oxides, SOx, before being discharged to the environment. In the drawing only one actual washing cycle is shown, but the washing may, if so required, be performed in one or several stages, and it is carried out at least mainly by using water. The wash water flow circulation comprises a wash water tank 19, from which the wash water is pumped by a pump 20 via a feed line 18 to the scrubber. The circulation also includes a heat exchanger 22, which may advantageously function by seawater and by means of which the wash water is cooled. The cooled wash water condenses in the hot exhaust gas flow and is recovered from the lower part of the scrubber to be reconducted to the wash water tank. The wash water tank 19 is provided with a discharge line 17 for discharging excess wash water and washing refuse from the wash water circulation.

Clean fresh water is provided by means of the reverse osmosis method by using an apparatus 1, to which seawater is pumped by a pump 4 via a feed line 5. The apparatus 1 has a fresh water side 2 and a wastewater side 3, from which seawater with highly concentrated salinity is led via a conduit 7 to the wash water tank 19. Possible supplementary water is introduced into the tank via a conduit 16. This supplementary water may naturally be seawater. The introduction thereof is controlled according to the waste water volume received from the apparatus 1 so that the salinity of the wash water supplied from the tank 19 to the scrubber will not become too diluted and affect detrimentally the washing result and the demands made thereon.

From the fresh water side of the fresh water apparatus 1 water is led via a conduit 6 to fulfil the needs of the watercraft, especially those of the passengers or other similar consumers. If the watercraft is provided with means for the reduction of NOx emissions from the internal combustion engines, fresh water may, in addition, be led via a conduit 8 to a tank 10 to be used for this purpose. Clean water may further be introduced to the tank 10 from another source via a conduit 12. From the tank 10 the water is pumped by a pump 13 via a filter 11 to be supplied to the inlet air 14 of the engine after the compressor 15. In practise, the supply may preferably be performed in two stages so that additional heating of the flow is provided between the stages from a suitable heat source, for instance by conducting at least a part of the exhaust gases through an exhaust gas heat exchanger arranged in the inlet air passage of the engine. The purpose of this additional heating is to get more water evaporated into the inlet air after the compressor 15, whereby also the reduction of NOx emissions in the combustion process of the engine is more efficient.

On passenger ships the other consumption, referred to by the conduit 6, is high, and therefore the exhaust gas scrubber 21 utilises much the other fresh water source, referred to by the conduit 12, for humidifying the inlet air after the compressor 15. The invention is also applicable on work ships, where the clean water, referred to by the conduit 8, to be conducted to the humidification of the inlet air of the engine is quantitatively dominating.

The invention is not limited to the shown embodiment, but several variations are conceivable within the scope of the appended claims.

## Claims

1. A method of cleaning the exhaust gases of an internal combustion engine (9) used in the power production of a watercraft, especially a large passenger ship, in an exhaust gas scrubber (21) mainly by water, **characterised in that** fresh water is produced from seawater in a manner known as such by utilising a reverse osmosis method, and that the seawater with concentrated salinity produced by the reverse osmosis process is introduced into the exhaust gas scrubber (21) for washing the exhaust gases of the internal combustion engine (9).

2. A method according to claim 1, **characterised in that** plain seawater is also mixed with said concentrated seawater prior to the introduction into the exhaust gas scrubber (21).

3. A method according to claim 1 or 2, **characterised in that** the wash water of the exhaust gas scrubber (21) is recirculated.

4. A method according to anyone of the preceding claims, **characterised in that** the wash water is cooled (22) before the introduction into the exhaust gas scrubber (21).

5. A method according to anyone of the preceding claims, **characterised in that** the fresh water provided by the reverse osmosis method is utilised for minimising the NOx emissions from the internal combustion engine (9) of the watercraft, for instance by supplying fresh water, after the turbocompressor (15) of the engine, to the humidification of the inlet air (14) of the engine.

6. An arrangement for cleaning the exhaust gases of an internal combustion engine (9) used in the power production of a watercraft, especially a large passenger ship, in an exhaust gas scrubber (21) mainly by water, **characterised in that** it comprises an apparatus (1,2,3) applying the reverse osmosis method for producing fresh water from seawater, and that the seawater with concentrated salinity produced by the reverse osmosis process is arranged to be introduced (7,19,20,18) into the exhaust gas scrubber (21) for washing the exhaust gases of the internal combustion engine (9).

7. An arrangement according to claim 6, **characterised in that** plain seawater (16) is also arranged to be mixed with said concentrated seawater prior to the introduction into the exhaust gas scrubber (21).

8. An arrangement according to claim 6 or 7, **characterised in that** the wash water of the exhaust gas scrubber (21) is arranged to be recirculated.

9. An arrangement according anyone of the preceding claims 6 - 8, **characterised in that** the wash water is arranged to be cooled (22) before the introduction into the exhaust gas scrubber (21).

10. An arrangement according anyone of the preceding claims 6 - 9, **characterised in that** the fresh water provided by the reverse osmosis method is arranged to be utilised for minimising the NOx emissions from the internal combustion engine (9) of the watercraft, for instance by supplying said fresh water (8,10,11,13), after the turbocompressor (15) of the engine (9), to the humidification of the inlet air (14) of the engine (9).

## Patentansprüche

1. Verfahren zum Reinigen der Abgase eines Verbrennungsmotors (9), der zur Krafterzeugung in einem Wasserfahrzeug, insbesondere einem großen Passagierschiff, verwendet wird, in einem Abgaswäscher (21) hauptsächlich durch Wasser, **dadurch gekennzeichnet, dass** Frischwasser aus Meerwasser in einer an sich bekannten Weise unter Verwendung eines Umkehrosmoseverfahrens hergestellt wird und dass das Meerwasser mit konzentriertem Salzgehalt, das durch den Umkehrosmoseprozess entstanden ist, in den Abgaswäscher (21) eingeleitet wird, um die Abgase des Verbrennungsmotors (9) zu waschen.

2. Verfahren nach Anspruch 1, **dadurch gekennzeichnet, dass** auch einfaches Meerwasser mit dem konzentrierten Meerwasser vermischt wird, bevor es in den Abgaswäscher (21) eingeleitet wird.

3. Verfahren nach Anspruch 1 oder 2, **dadurch gekennzeichnet, dass** das Waschwasser des Abgaswäschers (21) rezirkuliert wird.

4. Verfahren nach einem der vorangehenden Ansprüche, **dadurch gekennzeichnet, dass** das Waschwasser gekühlt (22) wird, bevor es in den Abgaswäscher (21) eingeleitet wird.

5. Verfahren nach einem der vorangehenden Ansprüche, **dadurch gekennzeichnet, dass** das Frischwasser, das durch das Umkehrosmoseverfahren erzeugt wird, dafür verwendet wird, die NOx-Emissionen des Verbrennungsmotors (9) des Wasserfahrzeugs zu minimieren, zum Beispiel durch die Zufuhr von Frischwasser, nach dem Turbolader (15) des Motors, zum Anfeuchten der Einlassluft (14) des Motors.

6. Anordnung zum Reinigen der Abgase eines Verbrennungsmotors (9), der zur Krafterzeugung in einem Wasserfahrzeug, insbesondere einem großen Passagierschiff, verwendet wird, in einem Abgaswäscher (21) hauptsächlich durch Wasser, **dadurch gekennzeichnet, dass** sie eine Vorrichtung (1, 2, 3) umfasst, die das Umkehrosmoseverfahren zum Erzeugen von Frischwasser aus Meerwasser durchführt, und dass das Meerwasser mit konzentriertem Salzgehalt, das durch den Umkehrosmoseprozess entstanden ist, dafür vorgesehen ist, in den Abgaswäscher (21) eingeleitet (7, 19, 20, 18) zu werden, um die Abgase des Verbrennungsmotors (9) zu waschen.

7. Anordnung nach Anspruch 6, **dadurch gekennzeichnet**, **dadurch gekennzeichnet, dass** auch einfaches Meerwasser (16) dafür vorgesehen ist, mit dem konzentrierten Meerwasser vermischt zu werden, bevor es in den Abgaswäscher (21) eingeleitet wird.

8. Anordnung nach Anspruch 6 oder 7, **dadurch gekennzeichnet, dass** das Waschwasser des Abgaswäschers (21) dafür vorgesehen ist, rezirkuliert zu werden.

9. Anordnung nach einem der vorangehenden Ansprüche 6-8, **dadurch gekennzeichnet, dass** das Waschwasser dafür vorgesehen ist, gekühlt (22) zu werden, bevor es in den Abgaswäscher (21) eingeleitet wird.

10. Anordnung nach einem der vorangehenden Ansprüche 6-9, **dadurch gekennzeichnet, dass** das Frischwasser, das durch das Umkehrosmoseverfahren erzeugt wird, dafür vorgesehen ist, zur Minimierung der NOx-Emissionen des Verbrennungsmotors (9) des Wasserfahrzeugs verwendet zu werden, zum Beispiel durch die Zufuhr von Frischwasser (8, 10, 11, 13), nach dem Turbolader (15) des Motors (9), zum Anfeuchten der Einlassluft (14) des Motors (9).

## Revendications

1. Procédé de nettoyage des gaz d'échappement d'un moteur à combustion interne (9) utilisé dans le cadre de la production d'énergie électrique d'une embarcation, notamment d'un grand paquebot, dans un épurateur de gaz d'échappement (21) principalement par de l'eau, **caractérisé en ce que** de l'eau fraîche est produite à partir de l'eau de mer d'une manière connue en soi en utilisant un procédé d'osmose inverse, et **en ce que** l'eau de mer avec une salinité concentrée produite par le procédé d'osmose inverse est introduite dans l'épurateur de gaz d'échappement (21) pour laver les gaz d'échappement du moteur à combustion interne (9).

2. Procédé selon la revendication 1, **caractérisé en ce que** de l'eau de mer pure est aussi mélangée avec ladite eau de mer concentrée avant l'introduction dans l'épurateur de gaz d'échappement (21).

3. Procédé selon la revendication 1 ou 2, **caractérisé en ce que** l'eau de lavage de l'épurateur de gaz d'échappement (21) est remise en circulation.

4. Procédé selon une quelconque des revendications précédentes, **caractérisé en ce que** l'eau de lavage est refroidie (22) avant l'introduction dans l'épurateur de gaz d'échappement (21).

5. Procédé selon une quelconque des revendications précédentes, **caractérisé en ce que** l'eau fraîche fournie par le procédé d'osmose inverse est utilisée pour minimiser les émissions de NOx provenant du moteur à combustion interne (9) de l'embarcation, par exemple en alimentant de l'eau fraîche, après le turbocompresseur (15) du moteur, vers l'humidification de l'air d'admission (14) du moteur.

6. Dispositif de nettoyage des gaz d'échappement d'un moteur à combustion interne (9) utilisé dans le cadre de la production d'énergie électrique d'une embarcation, notamment un grand paquebot, dans un épurateur de gaz d'échappement (21) principalement par de l'eau, **caractérisé en ce que** il comprend un appareil (1, 2, 3) appliquant le procédé pour produire de l'eau fraîche à partir de l'eau de mer, et **en ce que** l'eau de mer avec une salinité concentrée produite par le procédé d'osmose inverse est agencée afin d'être introduite (7, 19, 20, 18) dans l'épurateur de gaz d'échappement (21) pour laver les gaz d'échappement du moteur à combustion interne (9).

7. Dispositif selon la revendication 6, **caractérisé en ce que** de l'eau de mer pure (16) est aussi agencée afin d'être mélangée avec ladite eau de mer concentrée avant l'introduction dans l'épurateur de gaz d'échappement (21).

8. Dispositif selon la revendication 6 ou 7, **caractérisé en ce que** l'eau de lavage de l'épurateur de gaz d'échappement (21) est agencée afin d'être remise en circulation.

9. Dispositif selon une quelconque des revendications précédentes 6 à 8, **caractérisé en ce que** l'eau de lavage est agencée afin d'être refroidie (22) avant l'introduction dans l'épurateur de gaz d'échappement (21).

10. Dispositif selon une quelconque des revendications précédentes 6 à 9, **caractérisé en ce que** l'eau fraîche fournie par le procédé d'osmose inverse est agencée afin d'être utilisée pour minimiser les émissions de NOx provenant du moteur à combustion interne (9) de l'embarcation, par exemple en alimentant ladite eau fraîche (8, 10, 11, 13) après le turbocompresseur (15) du moteur (9), vers l'humidification de l'air d'admission (14) du moteur (9).
